# EUROPÄISCHE PATENTSCHRIFT

(11) **EP 3 630 377 B1**
(45) Veröffentlichungstag und Bekanntmachung des Hinweises auf die Patenterteilung: **07.09.2022**
(21) Anmeldenummer: 18723512.2
(22) Anmeldetag: 09.05.2018
(51) Int. Cl.: B06B 1/06, G01F 1/66, G10K 11/00, G01S 7/521, G01S 15/08, G01S 15/88

(54) **ULTRASCHALLWANDLER**
ULTRASOUND TRANSDUCER
TRANSDUCTEUR À ULTRASONS

(30) Priorität: 29.05.2017 DE 102017111624
(43) Veröffentlichungstag der Anmeldung: 08.04.2020
(73) Patentinhaber: Endress+Hauser Flowtec AG, 4153 Reinach (CH)
(72) Erfinder: WIEST, Achim, 79576 Weil am Rhein (DE); GRUNWALD, Sascha, 79585 Steinen (DE); BRUMBERG, Oliver, 79618 Rheinfelden (DE)
(74) Vertreter: Waselikowski, Stefan
(86) Internationale Anmeldenummer: PCT/EP2018/062025
(87) Internationale Veröffentlichungsnummer: WO 2018/219613

(56) Entgegenhaltungen:
- DE-A1- 19 724 189
- DE-A1-102007 039 598
- JP-A- 2015 059 899

## Beschreibung

Die Erfindung betrifft einen Ultraschallwandler der Mess- und Automatisierungstechnik zur Bestimmung oder Überwachung einer Messgröße.

Ultraschallwandler sind seit langem Stand der Technik und unterliegen stetiger Anpassung an technische Erfordernisse sowie genereller Verbesserung. Wichtig für eine gute Sende- sowie Empfangsleistung ist eine akustische Anpassung des Ultraschallwandlers an das Medium, mit welchem der Ultraschallwandler wechselwirkt. Durch akustische Anpassung wird beispielsweise der Anteil einer an einer Grenzfläche Medium-Ultraschallwandler reflektierten Ultraschallsignalenergie an einer Gesamtenergie erniedrigt, wodurch der Sende- und Empfangswirkungsgrad verbessert wird. Gleichzeitig wirkt sich diese Anpassung positiv auf ein Signal-Rauschen-Verhältnis aus, da sich reflektierte Signalanteile aufgrund ihrer geringeren Energie weniger störend auswirken.

Die Offenlegungsschrift DE102009046862A1 schlägt ein Koppelelement eines Ultraschallwandlers eines Ultraschall-Durchflussmessgeräts vor, welches eine akustische Anpassung des Ultraschallwandlers an ein Medium sicherstellt. Das Koppelelement weist eine Vielzahl gebündelter Stäbe auf, welche Stäbe sich in einem Endbereich zum Medium hin verjüngen, wobei die Verjüngung für die akustische Anpassung verantwortlich ist. Nachteilhaft an der vorgeschlagenen Lösung ist eine geringe mechanische Stabilität des Bündels sowie eine Ausgedehntheit in Richtung der Längsachse der Stäbe.

DE102007039598 offenbart einen Ultraschallwandler umfassend ein Wandlerelement und ein mit dem Wandlerelement akustisch gekoppeltes Anpassungselement, wobei das Anpassungselement in einem ersten Teilbereich der axialen Ausdehnung jeden Querschnitt des Anpassungselements teilweise ausfüllt, wobei ein Ausfüllanteil im ersten Teilbereich entlang der ersten Längsachse in Richtung einer dem Wandlerelement zugewandten ersten Seite monoton zunehmend ist.

Die Aufgabe der Erfindung ist es daher, einen Ultraschallwandler mit einem kompakten und mechanisch robusten Koppelelement sowie ein Ultraschall-Messgerät mit einem solchen Ultraschallwandler vorzuschlagen.

Die Aufgabe wird gelöst durch einen Ultraschallwandler gemäß dem unabhängigen Anspruch 1 sowie durch ein Ultraschall-Durchflussmessgerät gemäß Anspruch 13 sowie durch ein Ultraschall-Messgerät gemäß Anspruch 14.

Ein erfindungsgemäßer Ultraschallwandler der Mess- und Automatisierungstechnik zur Bestimmung oder Überwachung einer Messgröße umfasst mindestens ein Wandlerelement, insbesondere ein Piezowandlerelement, zum Senden oder Empfangen von Ultraschallsignalen;
ein mit dem Wandlerelement akustisch gekoppeltes Anpassungselement mit einer dem Wandlerelement zugewandten ersten Seite und mit einer dem Wandlerelement abgewandten zweiten Seite, wobei das Anpassungselement dazu eingerichtet ist, eine akustische Anpassung zwischen dem Wandlerelement und einem das Anpassungselement beaufschlagenden Medium zu gewährleisten,
wobei das Anpassungselement eine erste Längsachse und eine bezüglich der ersten Längsachse eine axiale Ausdehnung aufweist,
und wobei das Anpassungselement dazu eingerichtet ist, Ultraschallsignale zwischen der ersten Seite und der zweiten Seite des Anpassungselements sowie umgekehrt zu übertragen,
wobei das Anpassungselement in einem ersten Teilbereich der axialen Ausdehnung jeden Querschnitt des Anpassungselements teilweise ausfüllt, wobei ein Ausfüllanteil im ersten Teilbereich entlang der ersten Längsachse in Richtung der ersten Seite monoton zunehmend ist,
wobei das Anpassungselement im ersten Teilbereich eine Mehrzahl von Ringelementen aufweist, welche konzentrisch um die erste Längsachse angeordnet sind,
und wobei im ersten Teilbereich jedes Ringelement jeden Querschnitt teilweise ausfüllt,
wobei der erste Teilbereich mindestens 60% und insbesondere mindestens 80% einer axialen Ausdehnung des Anpassungselements entlang der ersten Längsachse umfasst.

Die monotone Zunahme des Ausfüllanteils gewährleistet eine Impedanzanpassung zwischen der ersten Seite des Anpassungselements sowie der zweiten Seite des Anpassungselements. Die Tatsache, dass sich jedes Ringelement über den gesamten ersten Teilbereich erstreckt, ermöglicht eine kompakte Bauweise des Anpassungselements. Das nicht von den Ringelementen ausgefüllte Volumen kann durch ein Gas, eine Flüssigkeit oder durch einen anderen Feststoff gefüllt sein. Auch ein Niederdruck bzw. Vakuum kann in dem Volumen angeordnet sein.

Zumindest die Ringelemente sind dabei zumindest aus einem Werkstoff der folgenden Liste gefertigt: Metall wie beispielsweise Edelstahl oder Titan, Glas, Keramik.

In einer Ausgestaltung füllt das Anpassungselement in einem der zweiten Seite zugewandten, die zweite Seite abschließenden zweiten Teilbereich der axialen Ausdehnung einen Querschnitt des Anpassungselements zumindest zu 90% und insbesondere zumindest zu 95% und bevorzugt mindestens zu 97% aus.

Die zumindest fast vollständige Ausfüllung des Querschnitts im zweiten Teilbereich ermöglicht einen effizienten Übergang von Ultraschallsignalen zwischen Wandlerelement und dem Medium sowie umgekehrt. Idealerweise ist eine axiale Ausdehnung des zweiten Teilabschnitts kleiner als die Wellenlänge der Ultraschallsignale im Medium.

In einer Ausgestaltung füllt das Anpassungselement in einem der ersten Seite zugewandten, die erste Seite abschließenden dritten Teilbereich der axialen Ausdehnung einen Querschnitt des Anpassungselements vollständig aus.

In einer Ausgestaltung weisen die Ringelemente auf einer dem Medium zugewandten Seite jeweils ein Fußelement auf, welche Fußelemente den zweiten Teilbereich zumindest teilweise ausbilden, und/oder die Ringelemente weisen auf einer dem Wandlerelement zugewandten Seite ein Fußelement auf, welche Fußelemente den dritten Teilbereich zumindest teilweise ausbilden.

In einer Ausgestaltung ist der dritte Teilbereich zumindest teilweise aus mindestens einem der folgenden Elemente gebildet: Lotschicht, Schweißschicht, Klebeschicht, erste Platte, wobei die erste Platte im Wesentlichen senkrecht zur Längsachse ist. Die erste Platte kann dabei ein Elastomer oder ein Weichmetall umfassen.

Die Ringelemente können beispielsweise auch bei einer plastischen Verformung des dritten Teilbereichs gegen eine Gehäusewand oder gegen ein Wandlerelement gepresst werden, um die Übertragung von Ultraschallsignalen zu verbessern. Dies kann beispielsweise durch einen leicht verformbaren dritten Teilbereich gewährleistet sein.

In einer Ausgestaltung ist der zweite Teilbereich entlang der ersten Längsachse zumindest abschnittsweise aus einer zweite Platte gebildet ist und mit den Ringelementen in Kontakt steht, wobei die zweite Platte im Wesentlichen senkrecht zur ersten Längsachse ist.

Die Ringelemente können dabei mit der zweiten Platte durch ein stoffschlüssiges Verfahren wie beispielsweise Löten, Kleben, Schweißen verbunden sein. Alternativ oder zusätzlich kann auch eine formschlüssige Verbindung der Ringelemente mit der Platte beispielsweise durch Aussparungen in der Platte hergestellt sein.

Der mit dem Medium in Kontakt stehende Bereich des Anpassungselements kann mit einer schützenden Beschichtung versehen sein. Die Beschichtung kann bevorzugt aus einem Edelmetall, Edelstahl, Kunststoff wie ein chemisch beständiges Polymer oder einer Keramik sein. Bei abrasiven Medien ist eine harte, z.B. keramische Beschichtung oder eine Metalloxidbeschichtung vorteilhaft.

In einer Ausgestaltung weist das Anpassungselement Druckausgleichsöffnungen auf, welche in den Ringelementen und/oder im zweiten Teilbereich und/oder in einer Ummantelung des Anpassungselements angeordnet sind.

Druckausgleichsöffnungen können beispielsweise in Form von ringförmigen Spalten im zweiten Teilbereich angeordnet sein.

In einer Ausgestaltung weist der Ultraschallwandler ein Gehäuse mit einer ersten Gehäusekammer auf, welches dazu eingerichtet ist, das Wandlerelement zu beherbergen,
wobei das Wandlerelement in der ersten Gehäusekammer eingebettet ist.

In einer Ausgestaltung weist das Gehäuse eine dem Medium zugewandte Außenseite auf,
wobei das Anpassungselement an der Außenseite des Gehäuses angeordnet ist und durch eine Gehäusewand vom Wandlerelement getrennt ist.

In einer Ausgestaltung weist das Gehäuse eine zweite Gehäusekammer auf, welche von der ersten Gehäusekammer durch eine mediendichte Innenwand getrennt ist,
wobei das Anpassungselement auf einer dem Medium zugewandten Seite der Innenwand angeordnet ist, und wobei das Wandlerelement auf einer dem Medium abgewandten Seite der Innenwand angeordnet ist,
wobei die Gehäusekammer das Anpassungselement in axialer Richtung bezüglich der ersten Längsachse in Richtung des Mediums zumindest teilweise umschließt.

In einer Ausgestaltung weisen die Ringelemente auf einer dem Wandlerelement zugewandten Seite eine erste Dicke von mindestens 0.4 mm und insbesondere mindestens 0.5 mm und bevorzugt mindestens 0.6 mm aufweisen, und/oder wobei die Ringelemente auf der dem Wandlerelement zugewandten Seite eine erste Dicke von höchstens 1.5 mm und insbesondere höchstens 1.2 mm und bevorzugt höchstens 1 mm aufweisen, und/oder
wobei die Ringelemente auf einer dem zweiten Teilbereich zugewandten Seite eine zweite Dicke von mindestens 0.005 mm und insbesondere mindestens 0.01 mm und bevorzugt mindestens 0.02 mm aufweisen, und/oder wobei die Ringelemente auf der dem zweiten Teilbereich zugewandten Seite eine zweite Dicke von höchstens 0.4 mm und insbesondere höchstens 0.3 mm und bevorzugt höchstens 0.2 mm aufweisen.

Die hier genannten Abmessungen beziehen sich dabei auf einen Ultraschallwandler, welcher für Ultraschallsignale mit einer Frequenz von ungefähr 1MHz optimiert ist. Ultraschallwandler, welche für Ultraschallsignale mit anderen Frequenzen und somit mit anderen Wellenlängen optimiert sind, gelten der Wellenlänge entsprechend angepasste Abmessungen. Bei größer werdender Wellenlänge nehmen die Abmessungen entsprechend zu.

Ein Verhältnis erste Dicke zu zweite Dicke ist dabei kleiner als ½, und insbesondere kleiner als 1/5 und bevorzugt kleiner als 1/20.

Die erste Dicke ist dabei bevorzugt weniger als 1/3, und besonders bevorzugt weniger als 1/5 der axialen Ausdehnung des Anpassungselements.

In einer Ausgestaltung ist eine radiale Beabstandung der Ringelemente auf der dem Wandlerelement zugewandten Seite mindestens 0.02 und insbesondere 0.05 und bevorzugt mindestens 0.1 mm.

In einer Ausgestaltung weist das Anpassungselement eine axiale Ausdehnung von mindestens 3 mm und insbesondere mindestens 5 mm und bevorzugt mindestens 7 mm auf und/oder wobei das Anpassungselement eine axiale Ausdehnung von höchstens 30 mm und insbesondere höchstens 25 mm und bevorzugt höchstens 20 mm auf.

In einer Ausgestaltung ist das Anpassungselement zumindest teilweise mittels mindestens eines der folgenden Herstellungsverfahren hergestellt:
Sintern, Lasersintern, Gießen, Spritzgießen, 3D-Druck.

Ein erfindungsgemäßes Ultraschall-Durchflussmessgerät zum Messen des Volumendurchflusses oder der Durchflussgeschwindigkeit eines ein Messrohr durchströmenden Mediums mit mindestens einem erfindungsgemäßen Ultraschallwandler weist ein Messrohr zum Führen des Mediums auf,
wobei der mindestens eine Ultraschallwandler in einer Wand des Messrohrs angebracht ist,
und wobei das Durchflussmessgerät eine elektronische Betriebsschaltung zum Betreiben des Ultraschallwandlers aufweist.

Ein erfindungsgemäßes Ultraschall-Messgerät zum Messen des Füllstands eines in einem Behältnis befindlichen Mediums oder ein Ultraschall-Abstandsmessgerät mit mindestens einem erfindungsgemäßen Ultraschallwandler weist eine elektronische Betriebsschaltung zum Betreiben des Ultraschallwandlers auf, wobei der Ultraschallwandler in einer Wand des Behältnisses angebracht ist.

Im Folgenden wird die Erfindung anhand der in den Zeichnungen dargestellten Ausführungsbeispielen beschrieben.
Fig. 1 skizziert einen schematischen, beispielhaften Querschnitt durch ein erfindungsgemäßes Anpassungselement;
Fig. 2 skizziert einen schematischen, beispielhaften Querschnitt durch ein weiteres erfindungsgemäßes Anpassungselement;
Figs. 3 a) bis 3 d) skizzieren schematische, beispielhafte Querschnitte durch Ultraschallwandler mit jeweils einem erfindungsgemäßen Anpassungselement;
Fig. 4 a) skizziert einen schematischen, beispielhaften Querschnitt durch ein Ultraschall-Durchflussmessgerät; und Fig. 4 b) zeigt einen schematischen, beispielhaften Querschnitt durch ein Ultraschall-Füllstandsmessgerät.

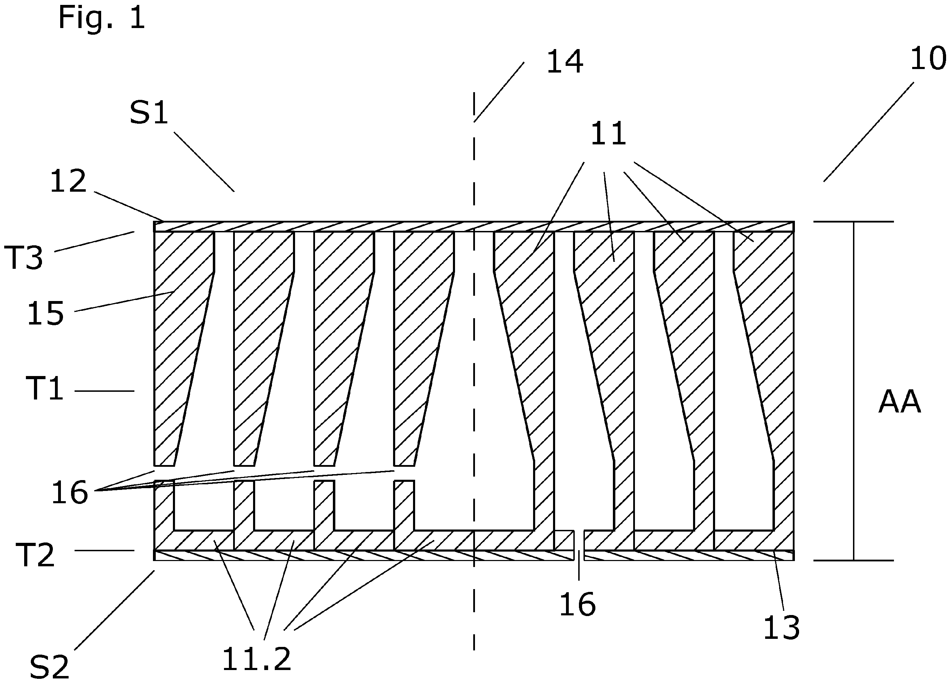

Fig. 1 skizziert einen Querschnitt durch ein erfindungsgemäßes Anpassungselement 10, welches Anpassungselement mehrere Ringelemente 11 aufweist, welche konzentrisch um eine erste Längsachse 14 herum angeordnet sind, wobei ein äußeres Ringelement eine Ummantelung 15 des Anpassungselement ist. Die Ringelemente können wie in diesem Ausführungsbeispiel gezeigt, auf einer einem Medium zugewandten zweiten Seite S2 zweite Fußelemente 11.2 aufweisen, welche sich senkrecht zur ersten Längsachse erstrecken und in fester Verbindung zu benachbarten Ringelementen 11 stehen. Die Verbindung zwischen den Ringelementen mittels der zweiten Fußelemente 11.2 kann dabei eine Löt-, Schweiss- oder Klebeverbindung sein. Zusätzlich kann, wie in diesem Ausführungsbeispiel gezeigt, die zweite Seite des Anpassungselements durch eine zweite Platte 13 abgeschlossen sein, welche mit den Ringelementen 11 verbunden ist. Im Falle nicht vorhandener zweiter Fußelemente 11.2 können die Ringelemente beispielsweise formschlüssig in Aussparungen (nicht gezeigt) der zweiten Platte 13 eingreifen. Die Verbindung zwischen den Ringelementen und der zweiten Platte kann alternativ oder ergänzend auch eine Löt-, Schweiß- oder Klebeverbindung sein. Im Falle vorhandener Fußelemente 11.2 ist die Verbindung zwischen den Ringelementen und der zweiten Platte bevorzugt eine Löt-, Schweiß- oder Klebeverbindung. Alternativ oder zusätzlich können die Fußelemente bzw. die zweite Platte mediumsseitig mit einer Beschichtung versehen sein, um das Anpassungselement gegenüber dem Medium zu schützen. Der Schutz kann z.B. vor sauren oder alkalischen Medien durch ein edles Metall oder chemisch beständiges Polymer oder Keramik sichergestellt sein. Bei abrasiven Medien ist eine harte, z.B. keramische Beschichtung oder eine Metalloxidbeschichtung vorteilhaft.

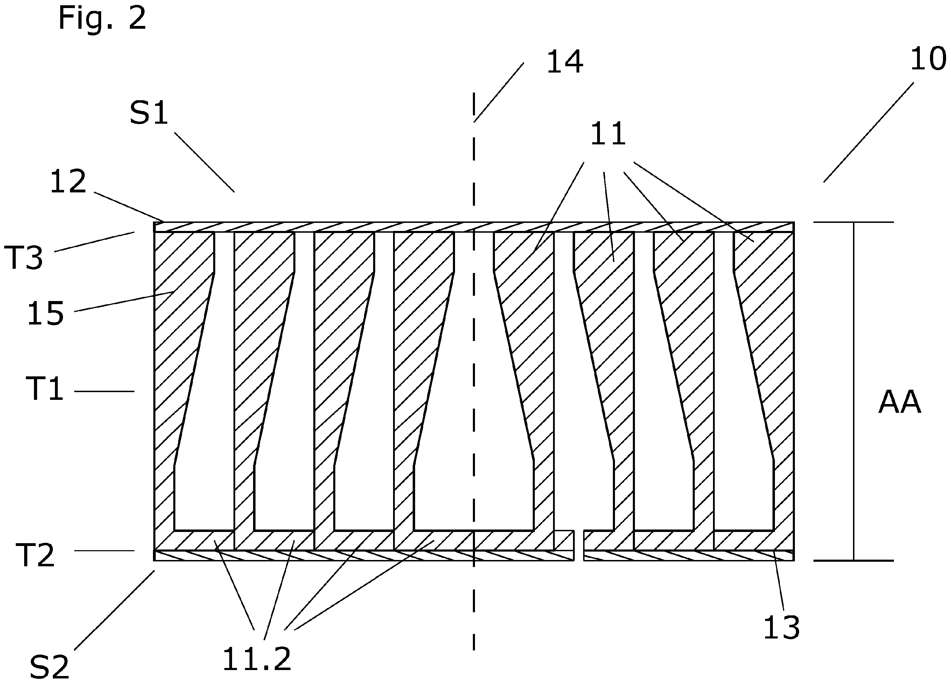

In Richtung einer einem Wandlerelement 20 (siehe Fig. 2) zugewandten Seite S1 weisen die Ringelemente in einem ersten Teilabschnitt entlang der ersten Längsachse eine monoton zunehmende Querschnittsfläche auf, wobei der erste Teilabschnitt mindestens 60% und bevorzugt mindestens 80% einer axialen Ausdehnung AA des Anpassungselements einnimmt. Das Anpassungselement ist auf der zweiten Seite S2 durch einen zweiten Teilabschnitt T2 abgeschlossen, in welchem das Anpassungselement einen Querschnitt des Anpassungselements zumindest zu 95% und insbesondere zumindest zu 98% ausfüllt.

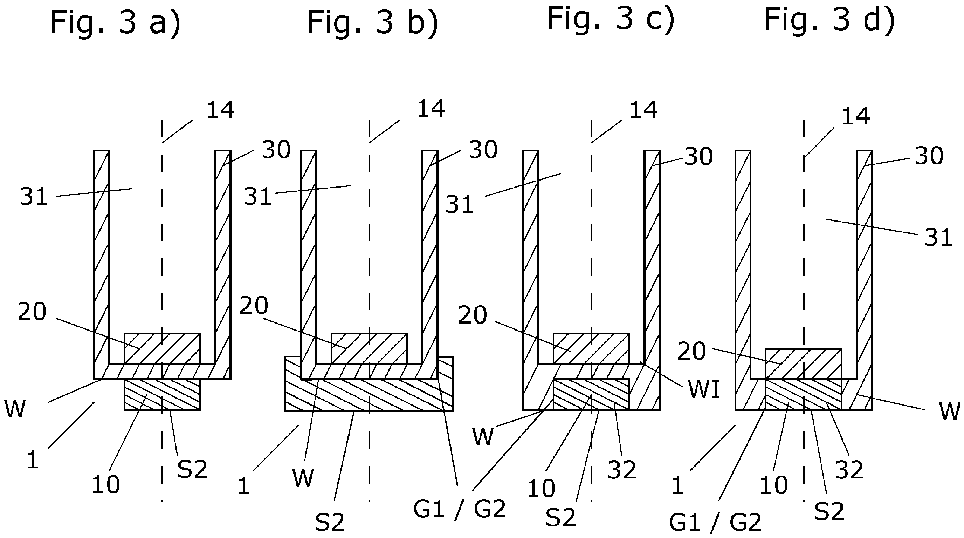

Die erste Seite S1 des Anpassungselements ist dazu eingerichtet, mit einem Gehäuse 30 des Ultraschallwandlers oder mit dem Wandlerelement 20 beispielsweise durch Kleben oder Schweißen oder Löten verbunden zu werden, siehe Fig. 3 a) bis Fig. 3 d). Die erste Seite des Anpassungselements ist in diesem Ausführungsbeispiel in einem dritten Teilabschnitt T3 durch eine Lotschicht, Schweißschicht, Klebeschicht oder erste Platte 12 abgeschlossen. Alternativ kann der erste Teilabschnitt direkt mit dem Gehäuse bzw. dem Wandlerelement verbunden sein.

Die im ersten Teilabschnitt T1 in Richtung der ersten Seite S1 monoton zunehmende Ausfüllung der Querschnitte des Anpassungselements geschieht durch eine Zunahme einer Dicke der Ringelemente, welche Ringelemente dazu eingerichtet sind, Schallsignale zwischen der ersten Seite S1 und der zweiten Seite S2 sowie umgekehrt übertragen. Schallsignale, welche das Anpassungselement durchlaufen, verursachen eine Auslenkung der Ringelemente in Richtung der ersten Längsachse, wobei eine lokale Auslenkung der Ringelemente von einer lokalen Schallenergie sowie von einer lokalen Dicke der Ringelemente abhängt, wobei eine zunehmende Dicke mit einer Abnahme der lokalen axialen Auslenkung einhergeht. Da die Amplitude einer Auslenkung bei gegebener Schallenergie eine Funktion einer akustischen Impedanz eines Mediums bzw. eines Gegenstands ist, gewährleistet die Veränderung der Dicke der Ringelemente und somit eine Veränderung der Amplitude der lokalen axialen Auslenkung der Ringelemente entlang der ersten Längsachse eine Impedanzanpassung zwischen einem die zweite Seite beaufschlagenden Medium sowie der dem Wandlerelement zugewandten Seite des Anpassungselements.

Da erfindungsgemäße Ultraschallwandler unter verschiedenen Bedingungen eingesetzt werden, kann es sinnvoll sein, Druckausgleichsöffnungen 16 zum ersten Teilbereich vorzusehen, welche in den Ringelementen und/oder in der zweiten Seite angeordnet sind. Die Druckausgleichsöffnungen sind dabei klein, und nehmen im zweiten Teilbereich weniger als 5 % und insbesondere weniger als 2 % der Querschnittsfläche des Anpassungselements ein. Beispielsweise können die Druckausgleichsöffnungen im zweiten Teilbereich als ringförmige Spalte zwischen den zweiten Fußelementen ausgestaltet sein. Bei der oben gegebenen Definition des ersten Teilbereichs anhand der monotonen Zunahme der Querschnittsflächen des Anpassungselements sind Druckausgleichsöffnungen in den Ringelementen nicht zu berücksichtigen. Anders als in Fig. 1 gezeigt, müssen die Ringelemente weder gleichförmig sein, noch muss die Orientierung oder eine geometrische Ausgestaltung der zweiten Fußelemente gleich sein. Ergänzend oder alternativ zur Lotschicht, Schweißschicht, Klebeschicht bzw. ersten Platte 12 können die Ringelemente auf der ersten Seite S1 im dritten Teilabschnitt auch erste Fußelemente aufweisen, welche ähnlich wie die zweiten Fußelemente eine Verbindung zu benachbarten Ringelementen herstellen.

Fig. 2 skizziert einen Querschnitt durch ein erfindungsgemäßes Anpassungselement gemäß Fig. 1, jedoch ohne Druckausgleichsöffnungen.

Figs. 3 a) bis 3 d) skizzieren Querschnitte dreier beispielhafter Ausführungen eines Ultraschallwandlers mit jeweils einem erfindungsgemäßen Anpassungselement. Fig. 3 a) zeigt einen Ultraschallwandler mit einem Gehäuse 30 und einer ersten Gehäusekammer 31, in welcher Gehäusekammer das Wandlerelement 20 angeordnet ist. Das Anpassungselement ist auf einer Außenseite einer Gehäusewand W auf einer dem Wandlerelement gegenüberliegenden Seite angeordnet. Schallsignale welche vom Wandlerelement 20 zum Anpassungselement 10 bzw. umgekehrt laufen, passieren die mediendichte Gehäusewandung.

Fig. 3 b) skizziert eine Variante des in Fig. 3 a) gezeigten Ultraschallwandler, wobei das Anpassungselement über ein erstes Gewinde G1 mit einem zweiten Gewindes G2 der Gehäusewand verschraubt ist.

Fig. 3 c) skizziert einen Ultraschallwandler, bei welchem das Wandlerelement 20 in einer zweiten Gehäusekammer 32 des Gehäuses 30 angeordnet ist, und wobei das Wandlerelement sowie das Anpassungselement durch eine mediendichte Innenwand WI getrennt sind. Diese Ausgestaltung ermöglicht eine sichere Befestigung des Wandlerelements am bzw. im Gehäuse und ist somit insbesondere für Durchflussmessungen geeignet.

Fig. 3 d) skizziert eine weitere Variante eines Ultraschallwandlers, wobei das Anpassungselement 10 in der Wand W des Gehäuses angeordnet ist, wobei das Anpassungselement und das Wandlerelement nicht durch die Gehäusewand W getrennt sind.

Die Befestigung des Anpassungselements am Gehäuse kann wie in Figs. 3 b) bis 3 d) gezeigt zusätzlich oder alternativ über eine Verschraubung sichergestellt sein, wobei das Gehäuse ein zweites Gewinde G2 und das Wandlerelement ein dazu komplementäres Gewinde G1 aufweist. Die Befestigung kann aber auch wie in Fig. 3 a) ohne Verschraubung nur mittels beispielsweise Kleben, Schweißen oder Löten gewährleistet sein.

Des Weiteren kann die mediendichte Innenwand an aktuelle Ex-Anforderungen oder Druckgeräterichlinien im Hinblick auf Wandstärke und Materialauswahl angepasst sein.

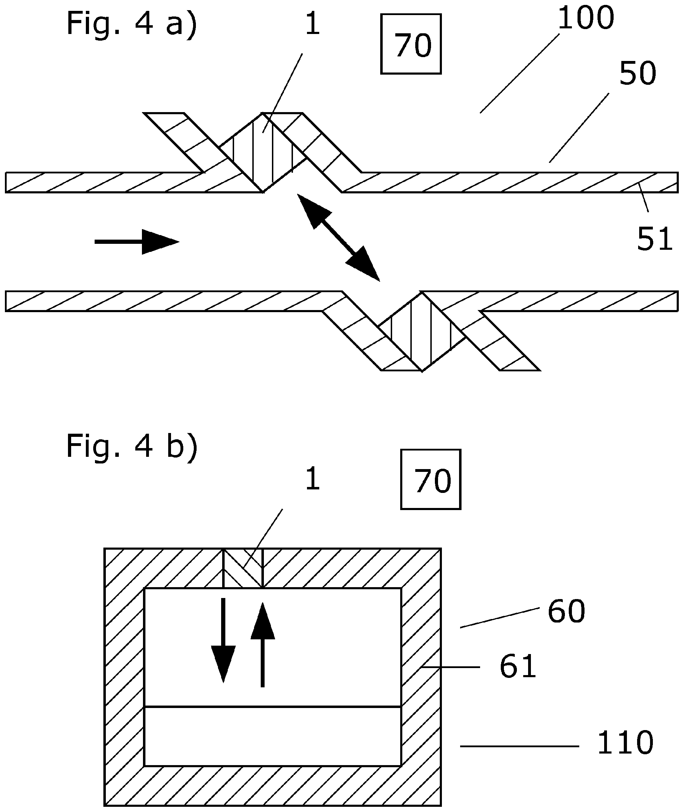

Fig. 4 a) skizziert ein beispielhaftes Ultraschall-Durchflussmessgerät 100, welches nach dem Laufzeit- oder Laufzeitdifferenzenprinzip arbeitet, wobei das Ultraschall-Durchflussmessgerät zwei erfindungsgemäße Ultraschallwandler 1, welche in einer Messrohrwand 51 eines Messrohrs 50 angeordnet sind; und eine elektronische Mess-/Betriebsschaltung 70 zum Betreiben der Ultraschallwandler aufweist, welche elektronische Mess-/Betriebsschaltung mittels elektrischer Verbindungen (der Übersichtlichkeit geschuldet nicht gezeigt) mit den Ultraschallwandlern 1 verbunden ist. Von den Ultraschallwandlern ausgesandte Ultraschallsignale wandern schräg zu einer Ausbreitungsrichtung des Mediums im Messrohr durch das Medium und erfahren eine laufrichtungsabhängige Laufzeitveränderung, welche für die Ermittelung eines Durchflussmesswerts durch die elektronische Mess-Betriebsschaltung 70 heranziehbar ist. Alternativ kann ein beispielhaftes Ultraschall-Durchflussmessgerät auch nach dem Dopplerprinzip arbeiten. In diesem Fall ist nur ein einzelner Ultraschallwandler notwendig.

Fig. 4 b) skizziert ein beispielhaftes Ultraschall-Füllstandsmessgerät 110 mit einem Behältnis 60, einem in einer Behältniswand 60 angeordneten erfindungsgemäßen Ultraschallwandler 1 sowie einer elektronische Mess-/Betriebsschaltung 70 zum Betreiben des Ultraschallwandlers. Der Ultraschallwandler 1 ist dazu eingerichtet, Ultraschallsignale auszusenden, und die von einer Grenzfläche eines im Behältnis befindlichen Mediums rückreflektieren Ultraschallsignale zu empfangen. Aus der Signallaufzeit lässt sich mittels der elektronischen Mess-/Betriebsschaltung der Füllstand des Mediums berechnen. Der Ultraschallwandler kann beispielsweise auch so in der Behältniswand angeordnet sein, dass die Ultraschallsignale vor Reflektion an einer Grenzfläche des Mediums das Medium durchlaufen.

Äquivalent zum Ultraschall-Füllstandsmessgerät lässt sich ein Ultraschallwandler auch als Ultraschall-Abstandsmessgerät einsetzen.

### Bezugszeichenliste

- 1: Ultraschallwandler
- 10: Anpassungselement
- 11: Ringelement
- 11.2: zweites Fußelement
- 12: Lotschicht, Schweißschicht, Klebeschicht, erste Platte
- 13: zweite Platte
- 14: erste Längsachse
- 15: Ummantelung
- 16: Druckausgleichsöffnung
- G1: erstes Gewinde
- G2: zweites Gewinde
- S1: erste Seite
- S2: zweite Seite
- T1: erster Teilbereich
- T2: zweiter Teilbereich
- T3: dritter Teilbereich
- AA: Axiale Ausdehnung
- 20: Wandlerelement
- 30: Gehäuse
- 31: erste Gehäusekammer
- 32: zweite Gehäusekammer
- W: Gehäusewand
- WI: Innenwand
- 50: Messrohr
- 51: Messrohrwand
- 60: Behältnis
- 61: Behältniswand
- 70: elektronische Mess-/Betriebsschaltung
- 100: Ultraschall-Durchflussmessgerät
- 110: Ultraschall-Füllstandsmessgerät

## Patentansprüche

1. Ultraschallwandler (1) der Mess- und Automatisierungstechnik zur Bestimmung oder Überwachung einer Messgröße umfassend:
ein Wandlerelement (20) zum Senden oder Empfangen von Ultraschallsignalen;
ein mit dem Wandlerelement akustisch gekoppeltes Anpassungselement (10) mit einer dem Wandlerelement zugewandten ersten Seite (S1) und mit einer dem Wandlerelement abgewandten zweiten Seite (S2), wobei das Anpassungselement dazu eingerichtet ist, eine akustische Anpassung zwischen dem Wandlerelement und einem das Anpassungselement beaufschlagenden Medium zu gewährleisten,
wobei das Anpassungselement eine erste Längsachse (14) und eine bezüglich der ersten Längsachse axiale Ausdehnung (AA) aufweist,
und wobei das Anpassungselement dazu eingerichtet ist, Ultraschallsignale zwischen der ersten Seite und der zweiten Seite des Anpassungselements sowie umgekehrt zu übertragen,
wobei das Anpassungselement in einem ersten Teilbereich (T1) der axialen Ausdehnung jeden Querschnitt des Anpassungselements teilweise ausfüllt, wobei ein Ausfüllanteil im ersten Teilbereich entlang der ersten Längsachse in Richtung der ersten Seite monoton zunehmend ist,
wobei der erste Teilbereich (T1) mindestens 60% und insbesondere mindestens 80% der axialen Ausdehnung (AA) des Anpassungselements entlang der ersten Längsachse (14) umfasst,
**dadurch gekennzeichnet, dass**
das Anpassungselement im ersten Teilbereich eine Mehrzahl von Ringelementen (11) aufweist, welche konzentrisch um die erste Längsachse angeordnet sind, wobei die monotone Zunahme des Ausfüllanteils durch eine Zunahme einer Dicke der Ringelemente eingerichtet ist,
und wobei im ersten Teilbereich jedes Ringelement jeden Querschnitt teilweise ausfüllt,
wobei die Ringelemente aus einem Metall, einem Glas oder einer Keramik gefertigt sind.

2. Ultraschallwandler (1) nach Anspruch 1,
wobei das Anpassungselement (10) in einem der zweiten Seite (S2) zugewandten, die zweite Seite abschließenden zweiten Teilbereich (T2) der axialen Ausdehnung einen Querschnitt des Anpassungselements zumindest zu 90% und insbesondere zumindest zu 95% und bevorzugt mindestens zu 97% ausfüllt.

3. Ultraschallwandler (1) nach Anspruch 1 oder 2,
wobei das Anpassungselement in einem der ersten Seite zugewandten, die erste Seite abschließenden dritten Teilbereich (T3) der axialen Ausdehnung (AA) einen Querschnitt des Anpassungselements vollständig ausfüllt.

4. Ultraschallwandler (1) nach einem der vorigen Ansprüche,
wobei die Ringelemente auf einer dem Medium zugewandten Seite jeweils ein Fußelement (11.2) aufweisen, welche Fußelemente den zweiten Teilbereich (T2) zumindest teilweise ausbilden, und/oder wobei die Ringelemente auf einer dem Wandlerelement zugewandten Seite ein Fußelement aufweisen, welche Fußelemente den dritten Teilbereich (T3) zumindest teilweise ausbilden.

5. Ultraschallwandler (1) nach einem der Ansprüche 3 oder 4,
wobei der dritte Teilbereich (T3) zumindest teilweise aus mindestens einem der folgenden Elemente gebildet ist: Lotschicht, Schweißschicht, Klebeschicht, Sinterschicht, erste Platte (12), wobei die erste Platte im Wesentlichen senkrecht zur Längsachse ist.

6. Ultraschallwandler (1) nach einem der vorigen Ansprüche,
wobei der zweite Teilbereich (T2) entlang der ersten Längsachse (14) zumindest abschnittsweise aus einer zweiten Platte (13) gebildet ist, welche Platte mit den Ringelementen in Kontakt steht
wobei die zweite Platte (13) im Wesentlichen senkrecht zur ersten Längsachse ist.

7. Ultraschallwandler (1) nach einem der vorigen Ansprüche,
wobei das Anpassungselement (10) Druckausgleichsöffnungen (16) aufweist, welche in den Ringelementen (11) und/oder im zweiten Teilbereich (T2) und/oder in einer Ummantelung des Anpassungselements angeordnet sind.

8. Ultraschallwandler (1) nach einem der vorigen Ansprüche,
wobei der Ultraschallwandler (1) ein Gehäuse (30) mit einer ersten Gehäusekammer (31) aufweist, welches Gehäuse dazu eingerichtet ist, das Wandlerelement (20) aufzunehmen, wobei das Wandlerelement in der ersten Gehäusekammer (31) angeordnet ist.

9. Ultraschallwandler (1) nach Anspruch 8,
wobei das Gehäuse (30) eine dem Medium zugewandte Außenseite aufweist,
wobei das Anpassungselement an der Außenseite des Gehäuses angeordnet ist und durch eine mediendichte Gehäusewand (W) vom Wandlerelement getrennt ist.

10. Ultraschallwandler (1) nach einem der vorigen Ansprüche 1 bis 8,
wobei das Gehäuse (30) eine zweite Gehäusekammer (32) aufweist, welche von der ersten Gehäusekammer durch eine mediendichte Innenwand (WI) getrennt ist,
wobei das Anpassungselement (10) auf einer dem Medium zugewandten Seite der Innenwand angeordnet ist, und wobei das Wandlerelement (20) auf einer dem Medium abgewandten Seite der Innenwand angeordnet ist,
wobei die zweite Gehäusekammer das Anpassungselement in axialer Richtung bezüglich der ersten Längsachse (14) in Richtung des Mediums zumindest teilweise umschließt.

11. Ultraschallwandler (1) nach einem der vorigen Ansprüche,
wobei die Ringelemente (11) im ersten Teilbereich (T1) auf einer dem Wandlerelement (20) zugewandten Seite eine erste Dicke von mindestens 0.4 mm und insbesondere mindestens 0.5 mm und bevorzugt mindestens 0.6 mm aufweisen, und/oder wobei die Ringelemente auf der dem Wandlerelement (20) zugewandten Seite eine erste Dicke von höchstens 1.5 mm und insbesondere höchstens 1.2 mm und bevorzugt höchstens 1 mm aufweisen, und/oder
wobei die Ringelemente (11) auf einer dem zweiten Teilbereich (T2) zugewandten Seite eine zweite Dicke von mindestens 0.005 mm und insbesondere mindestens 0.01 mm und bevorzugt mindestens 0.02 mm aufweisen, und/oder wobei die Ringelemente auf der dem zweiten Teilbereich (T2) zugewandten Seite eine zweite Dicke von höchstens 0.4 mm und insbesondere höchstens 0.3 mm und bevorzugt höchstens 0.2 mm aufweisen.

12. Ultraschallwandler (1) nach Anspruch 10 oder 11,
wobei eine radiale Beabstandung der Ringelemente auf der dem Wandlerelement (20) zugewandten Seite mindestens 0.02 und insbesondere 0.05 und bevorzugt mindestens 0.1 mm ist.

13. Ultraschall-Durchflussmessgerät zum Messen des Volumendurchflusses oder der Durchflussgeschwindigkeit eines ein Messrohr durchströmenden Mediums mit mindestens einem Ultraschallwandler (1) nach einem der vorigen Ansprüche,
wobei das Durchflussmessgerät ein Messrohr zum Führen des Mediums aufweist,
wobei der mindestens eine Ultraschallwandler in einer Wand des Messrohrs angebracht ist,
und wobei das Durchflussmessgerät eine elektronische Mess-/Betriebsschaltung zum Betreiben des Ultraschallwandlers aufweist.

14. Ultraschall-Füllstandsmessgerät (110) mit einem Behältnis (60) zum Messen des Füllstands eines im Behältnis befindlichen Mediums oder Ultraschall-Abstandsmessgerät mit mindestens einem Ultraschallwandler (1) nach einem der Ansprüche 1 bis 12,
wobei der Ultraschallwandler (1) in einer Wand des Behältnisses bzw. in einer Halterung des Ultraschall-Abstandsmessgeräts angebracht ist,
und wobei das Füllstandsmessgerät bzw. das Ultraschall-Abstandsmessgerät eine elektronische Mess-/Betriebsschaltung zum Betreiben des Ultraschallwandlers aufweist.

## Claims

1. Ultrasonic transducer (1) used in measuring and automation technology, wherein said transducer is designed to determine or monitor a measured variable, said transducer comprising:
a transducer element (20) designed to transmit or receive ultrasonic signals;
an adaptation element (10) acoustically coupled to the transducer element, with a first side (S1) facing towards the transducer element and a second side (S2) facing away from the transducer element, wherein the adaptation element is designed to guarantee an acoustic adjustment between the transducer element and a medium which impacts the adaptation element,
wherein the adaptation element has a first longitudinal axis (14) and an axial extension (AA) in relation to the first longitudinal axis,
and wherein the adaptation element is designed to transmit ultrasonic signals between the first side and the second side of the adaptation element and vice versa,
wherein the adaptation element partially fills in each cross-section of the adaptation element in a first subsection (T1) of the axial extension, wherein a filled-in proportion in the first subsection increases monotonically along the first longitudinal axis in the direction of the first side,
wherein the first subsection (T1) comprises at least 60 % and particularly at least 80 % of the axial extension (AA) of the adaptation element along the first longitudinal axis (14),
**characterized in that**
in the first subsection the adaptation element has several ring elements (11), wherein said elements are arranged concentrically around the first longitudinal axis, wherein the monotonic increase of the filled-in proportion is set by an increase in a thickness of the ring elements,
and wherein every ring element partially fills in each cross-section in the first subsection,
and wherein the ring elements are made from a metal, a glass or a ceramic.

2. Ultrasonic transducer (1) as claimed in Claim 1,
wherein the adaptation element (10) fills in at least 90 % and particularly at least 95 % and preferably at least 97 % of a cross-section of the adaptation element in a second subsection (T2) of the axial extension facing towards the second side (S2) and terminating the second side.

3. Ultrasonic transducer (1) as claimed in Claim 1 or 2,
wherein the adaptation element completely fills in a cross-section of the adaptation element in a third subsection (T3) of the axial extension (AA) facing towards the first side and terminating the first side.

4. Ultrasonic transducer (1) as claimed in one of the previous claims,
wherein the ring elements each have a foot element (11.2) on a side facing towards the medium, wherein said foot elements at least partially form the second subsection (T2), and/or
wherein the ring elements have a foot element on a side facing towards the transducer element, wherein said foot elements at least partially form the third subsection (T3).

5. Ultrasonic transducer (1) as claimed in one of the Claims 3 or 4,
wherein the third subsection (T3) is at least partly formed from at least one of the following elements: solder layer, welding layer, adhesive layer, sintered layer, first plate (12), wherein the first plate is essentially perpendicular to the longitudinal axis.

6. Ultrasonic transducer (1) as claimed in one of the previous claims,
wherein the second subsection (T2) is formed along the first longitudinal axis (14) at least in sections by a second plate (13), wherein said plate is in contact with the ring elements, wherein the second plate (13) is essentially perpendicular to the first longitudinal axis.

7. Ultrasonic transducer (1) as claimed in one of the previous claims,
wherein the adaptation element (10) has pressure compensation openings (16) that are arranged in the ring elements (11) and/or in the second subsection (T2) and/or in a jacket of the adaptation element.

8. Ultrasonic transducer (1) as claimed in one of the previous claims,
wherein the ultrasonic transducer (1) comprises a housing (30) with a first housing chamber (31), wherein said housing is designed to receive the transducer element (20), wherein the transducer element is arranged in the first housing chamber (31).

9. Ultrasonic transducer (1) as claimed in Claim 8,
wherein the housing (30) has an outside facing towards the medium,
wherein the adaptation element is arranged on the outside of the housing and is separated from the transducer element by a medium-tight housing wall (W).

10. Ultrasonic transducer (1) as claimed in one of the previous Claims 1 to 8,
wherein the housing (30) comprises a second housing chamber (32), which is separated from the first housing chamber by a medium-tight interior wall (WI),
wherein the adaptation element (10) is arranged on a side of the interior wall facing towards the medium, and the transducer element (20) is arranged on a side of the interior wall facing away from the medium,
wherein the second housing chamber at least partially surrounds the adaptation element in the axial direction in relation to the first longitudinal axis (14) in the direction of the medium.

11. Ultrasonic transducer (1) as claimed in one of the previous claims,
wherein, in the first subsection (T1) on a side facing towards the transducer element (20), the ring elements (11) have a first thickness of at least 0.4 mm and particularly of at least 0.5 mm and preferably of at least 0.6 mm, and/or wherein, on the side facing towards the transducer element (20), the ring elements have a first thickness of no more than 1.5 mm and particularly of no more than 1.2 mm and preferably of not more than 1 mm, and/or
wherein, on a side facing towards the second subsection (T2), the ring elements (11) have a second thickness of at least 0.005 mm and particularly of at least 0.01 mm and preferably of at least 0.02 mm, and/or wherein, on the side facing towards the second subsection (T2), the ring elements have a second thickness of no more than 0.4 mm and particularly of no more than 0.3 mm and preferably of no more than 0.2 mm.

12. Ultrasonic transducer (1) as claimed in Claim 10 or 11,
wherein a radial distance of the ring elements on the side facing towards the transducer element (20) is at least 0.02 and particularly 0.05 and preferably at least 0.1 mm.

13. Ultrasonic flowmeter designed to measure the volume flow or the flow velocity of a medium flowing through a measuring tube, with at least an ultrasonic transducer (1) as claimed in one of the previous claims,
wherein the flowmeter has a measuring tube designed to conduct the medium,
wherein the at least one ultrasonic transducer is mounted in a wall of the measuring tube,
and wherein the flowmeter comprises an electronic measuring/operating circuit to operate the ultrasonic transducer.

14. Ultrasonic level transmitter (110) with a vessel (60) designed to measure the level of a medium located in the vessel or ultrasonic distance measuring device comprising at least an ultrasonic transducer (1) as claimed in one of the Claims 1 to 12,
wherein the ultrasonic transducer (1) is mounted on a wall of the vessel or in a holder of the ultrasonic distance measuring device,
and wherein the level transmitter or the ultrasonic distance measuring device has an electronic measuring/operating circuit for operating the ultrasonic transducer.

## Revendications

1. Transducteur à ultrasons (1) de la technique de mesure et d'automatisation, lequel transducteur est destiné à la détermination ou à la surveillance d'une grandeur de mesure, lequel transducteur comprend :
un élément transducteur (20) destiné à émettre ou à recevoir des signaux ultrasonores ;
un élément d'adaptation (10) couplé acoustiquement à l'élément transducteur, lequel élément d'adaptation présente un premier côté (S1) tourné vers l'élément transducteur et un deuxième côté (S2) opposé à l'élément transducteur, l'élément d'adaptation étant conçu pour assurer une adaptation acoustique entre l'élément transducteur et un produit qui sollicite l'élément d'adaptation,
l'élément d'adaptation présentant un premier axe longitudinal (14) et une extension axiale (AA) par rapport au premier axe longitudinal,
et l'élément d'adaptation étant conçu pour transmettre des signaux ultrasonores entre le premier côté et le deuxième côté de l'élément d'adaptation et vice versa, l'élément d'adaptation remplissant partiellement chaque section transversale de l'élément d'adaptation dans une première zone partielle (T1) de l'extension axiale, une proportion de remplissage dans la première zone partielle augmentant de manière monotone le long du premier axe longitudinal en direction du premier côté,
la première zone partielle (T1) comprenant au moins 60 % et notamment au moins 80 % de l'extension axiale (AA) de l'élément d'adaptation le long du premier axe longitudinal (14),
**caractérisé en ce que**
l'élément d'adaptation comprend dans la première zone partielle une pluralité d'éléments annulaires (11), lesquels éléments sont disposés concentriquement autour du premier axe longitudinal, l'augmentation monotone de la proportion de remplissage étant établie par une augmentation d'une épaisseur des éléments annulaires,
et chaque élément annulaire remplissant partiellement chaque section transversale dans la première zone partielle,
les éléments annulaires étant fabriqués à partir d'un métal, d'un verre ou d'une céramique.

2. Transducteur à ultrasons (1) selon la revendication 1,
pour lequel l'élément d'adaptation (10) remplit une section transversale de l'élément d'adaptation au moins à 90 % et notamment au moins à 95 % et de préférence au moins à 97 % dans une deuxième zone partielle (T2) de l'extension axiale tournée vers le deuxième côté (S2) et fermant le deuxième côté.

3. Transducteur à ultrasons (1) selon la revendication 1 ou 2,
pour lequel l'élément d'adaptation remplit complètement une section transversale de l'élément d'adaptation dans une troisième zone partielle (T3) de l'extension axiale (AA) tournée vers le premier côté et fermant le premier côté.

4. Transducteur à ultrasons (1) selon l'une des revendications précédentes,
pour lequel les éléments annulaires présentent chacun un élément de pied (11.2) sur un côté tourné vers le produit, lesquels éléments de pied forment au moins partiellement la deuxième zone partielle (T2), et/ou
pour lequel les éléments annulaires présentent un élément de pied sur un côté tourné vers l'élément transducteur, lesquels éléments de pied forment au moins partiellement la troisième zone partielle (T3).

5. Transducteur à ultrasons (1) selon l'une des revendications 3 ou 4,
pour lequel la troisième zone partielle (T3) est formée au moins en partie par au moins l'un des éléments suivants : couche de brasure, couche de soudure, couche adhésive, couche frittée, première plaque (12), la première plaque étant pour l'essentiel perpendiculaire à l'axe longitudinal.

6. Transducteur à ultrasons (1) selon l'une des revendications précédentes, pour lequel la deuxième zone partielle (T2) est formée le long du premier axe longitudinal (14) au moins par sections d'une deuxième plaque (13), laquelle plaque est en contact avec les éléments annulaires, la deuxième plaque (13) étant essentiellement perpendiculaire au premier axe longitudinal.

7. Transducteur à ultrasons (1) selon l'une des revendications précédentes, pour lequel l'élément d'adaptation (10) présente des ouvertures de compensation de pression (16) qui sont disposées dans les éléments annulaires (11) et/ou dans la deuxième zone partielle (T2) et/ou dans une enveloppe de l'élément d'adaptation.

8. Transducteur à ultrasons (1) selon l'une des revendications précédentes, pour lequel le transducteur à ultrasons (1) comprend un boîtier (30) avec une première chambre de boîtier (31), lequel boîtier est adapté pour recevoir l'élément transducteur (20), l'élément transducteur étant disposé dans la première chambre de boîtier (31).

9. Transducteur à ultrasons (1) selon la revendication 8,
pour lequel l'élément d'adaptation est disposé à l'extérieur du boîtier et est séparé de l'élément transducteur par une paroi de boîtier (W) étanche au produit.

10. Transducteur à ultrasons (1) selon l'une des revendications précédentes 1 à 8,
pour lequel le boîtier (30) comprend une deuxième chambre de boîtier (32), laquelle est séparée de la première chambre de boîtier par une paroi intérieure (WI) étanche au produit,
l'élément d'adaptation (10) étant disposé sur un côté de la paroi intérieure tourné vers le produit, et l'élément transducteur (20) étant disposé sur un côté de la paroi intérieure opposé au produit,
la deuxième chambre du boîtier entourant au moins partiellement l'élément d'adaptation dans la direction axiale par rapport au premier axe longitudinal (14) en direction du produit.

11. Transducteur à ultrasons (1) selon l'une des revendications précédentes,
pour lequel les éléments annulaires (11) présentent dans la première zone partielle (T1), sur un côté tourné vers l'élément transducteur (20), une première épaisseur d'au moins 0,4 mm et notamment d'au moins 0,5 mm et de préférence d'au moins 0,6 mm, et/ou pour lequel les éléments annulaires présentent sur le côté tourné vers l'élément transducteur (20) une première épaisseur d'au plus 1,5 mm et notamment d'au plus 1,2 mm et de préférence d'au plus 1 mm, et/ou
pour lequel les éléments annulaires (11) présentent, sur un côté tourné vers la deuxième zone partielle (T2), une deuxième épaisseur d'au moins 0,005 mm et notamment d'au moins 0,01 mm et de préférence d'au moins 0,02 mm, et/ou pour lequel les éléments annulaires présentent, sur le côté tourné vers la deuxième zone partielle (T2), une deuxième épaisseur d'au plus 0,4 mm et notamment d'au plus 0,3 mm et de préférence d'au plus 0,2 mm.

12. Transducteur à ultrasons (1) selon la revendication 10 ou 11,
pour lequel un espacement radial des éléments annulaires sur le côté tourné vers l'élément transducteur (20) est d'au moins 0,02 et notamment de 0,05 et de préférence d'au moins 0,1 mm.

13. Débitmètre à ultrasons destiné à la mesure du débit volumique ou de la vitesse d'écoulement d'un produit traversant un tube de mesure, comprenant au moins un transducteur à ultrasons (1) selon l'une des revendications précédentes,
le débitmètre comportant un tube de mesure destiné à guider le produit,
l'au moins un transducteur à ultrasons étant monté dans une paroi du tube de mesure,
et le débitmètre comprenant un circuit électronique de mesure/d'exploitation destiné à exploiter le transducteur à ultrasons.

14. Transmetteur de niveau à ultrasons (110) avec un réservoir (60) destiné à mesurer le niveau d'un produit se trouvant dans le réservoir ou appareil de mesure de distance à ultrasons comprenant au moins un transducteur à ultrasons (1) selon l'une des revendications 1 à 12,
le transducteur à ultrasons (1) étant monté dans une paroi du réservoir ou dans un support de l'appareil de mesure de distance à ultrasons,
et le transmetteur de niveau ou l'appareil de mesure de distance à ultrasons comportant un circuit de mesure/d'exploitation électronique destiné à exploiter le transducteur à ultrasons.
